# FASCICULE DE BREVET EUROPEEN

(11) **EP 4 022 196 B1**
(45) Date de publication et mention de la délivrance du brevet: **06.09.2023**
(21) Numéro de dépôt: 20750332.7
(22) Date de dépôt: 08.07.2020
(51) Int. Cl.: F16F 7/10, B60G 7/04, F16F 9/58, B60G 15/06

(54) **BUTEE HYDRAULIQUE DE SUSPENSION DE VEHICULE AUTOMOBILE A MASSE INERTIELLE**
HYDRAULISCHER ANSCHLAG FÜR EINE KRAFTFAHRZEUGAUFHÄNGUNG MIT TRÄGHEITSMASSE
HYDRAULIC STOPPER FOR MOTOR VEHICLE SUSPENSION WITH INERTIAL MASS

(30) Priorité: 28.08.2019 FR 1909466
(43) Date de publication de la demande: 06.07.2022
(73) Titulaire: PSA Automobiles SA, 78300 Poissy (FR)
(72) Inventeur: MONTEIL, Christophe, 91640 BRIIS SOUS FORGES (FR); CHILLON, Jean, 92100 BOULOGNE BILLANCOURT (FR); DIMITRIJEVIC, Zoran, 91570 BIEVRES (FR); ROTA, Laurent, 91530 ST CHERON (FR)
(86) Numéro de dépôt international: PCT/FR2020/051218
(87) Numéro de publication internationale: WO 2021/038143

(56) Documents cités:
- DE-A1- 10 324 993
- FR-A- 1 221 773
- FR-A1- 3 066 571

## Description

La présente invention revendique la priorité de la demande française 1909466 déposée le 28.08.2019.

La présente invention concerne une butée hydraulique de fin de course de suspension de véhicule automobile, ainsi qu'un véhicule automobile comportant des suspensions équipées de ce type de butée hydraulique.

Les véhicules automobiles comportent pour chaque roue une suspension comprenant un ressort de suspension, et un amortisseur télescopique hydraulique qui freine les mouvements de cette suspension. Chaque suspension comprend généralement des butées de fin de course en élastomère, formant des tampons présentant une forte raideur qui arrêtent de manière rapide la fin de course en cas de choc important sur la suspension, avec un confort faible. Le document DE103 24 993 A1 montre une butée hydraulique de fin de course ayant toutes les caractéristiques du préambule de la revendication 1.

En variante, un type de butée hydraulique de fin de course connu, présenté notamment par le document FR-A1-3074244, comporte une chemise fixée en avant du piston d'amortissement, s'emboîtant sans jeu en fin de course autour d'un tube de butée en fermant progressivement des perçages de cette chemise. Un boisseau dont la hauteur est réglée par un ressort de poussée, freiné par un amortissement hydraulique, permet de boucher des perçages en modifiant la force de freinage de la butée hydraulique, en fonction de l'assiette du véhicule correspondant à sa hauteur au repos dépendant de sa charge.

On peut de cette manière avec un véhicule plus chargé présentant une assiette plus basse, augmenter le freinage de la butée hydraulique. Toutefois, quel que soit le type de butée de fin de course, on obtient une course de la suspension entre sa position d'assiette et l'arrivée sur cette butée qui diminue pour un véhicule plus chargé avec une assiette plus basse.

En particulier avec une suspension comprenant une raideur du ressort de suspension assez faible, et sur sa course principale un freinage réduit de l'amortisseur pour obtenir un bon niveau de filtrage des excitations à des fréquences plus élevées, on obtient une dégradation de la tenue de la caisse critiquable notamment sur les routes dégradées, entraînant des oscillations aux basses fréquences.

Dans ce cas avec une butée hydraulique de fin de course, il est alors difficile d'obtenir un réglage de cette butée convenant pour différentes charges et assiettes du véhicule, donnant des courses variables avant d'atteindre cette butée.

La présente invention a notamment pour but d'éviter ces inconvénients de la technique antérieure.

Elle propose à cet effet une butée hydraulique de fin de course de suspension de véhicule automobile, freinant un mouvement axial dirigé vers une direction avant, comportant une chambre de compression arrière qui lors d'un freinage transmet son fluide en passant par une colonne de fluide à inertie, vers un réservoir maintenant une pression dans le fluide, cette butée étant remarquable en ce que la chambre de compression est liée à un piston coulissant axialement, qui subit une force vers l'avant venant d'un ressort d'avance relié à un élément de la suspension, lors d'une compression de cette suspension, et une force vers l'arrière venant d'une chambre de compensation de hauteur prenant appui sur un corps de la butée, alimentée en fluide sous pression par le réservoir en passant par une restriction de passage de fluide.

Un avantage de cette butée hydraulique est que pour un véhicule faiblement chargé avec une assiette haute, la force vers l'avant appliquée par le ressort d'avance relié à l'élément de suspension, qui est peu comprimé, est faible. Le réservoir avec une légère pression finit en passant par la restriction, par remplir entièrement la chambre de compensation de hauteur en poussant vers l'arrière le piston. La butée est dans sa position la plus en arrière, en donnant une course définie entre la position d'assiette et l'arrivée sur cette butée.

Pour un véhicule fortement chargé avec une assiette basse, la force vers l'avant appliquée sur le piston par le ressort d'avance plus comprimé est plus importante, en donnant une pression plus élevée dans la chambre de compensation qui finit avec une dynamique lente, par se vider au moins en partie en retournant le fluide vers le réservoir présentant une plus faible pression. La butée liée au piston s'est déplacée vers l'avant, donnant une course entre la position d'assiette et l'arrivée sur cette butée qui reste sensiblement constante.

Dans le cas où le véhicule est déchargé avec une assiette qui remonte, la force du ressort d'avance diminue, et la chambre de compensation se remplit à nouveau avec une dynamique lente pour retrouver la position d'origine. On obtient de manière simple, efficace et économique, sans utiliser de contrôle électrique, un débattement de la suspension avant d'arriver sur la butée de fin de course, dépendant faiblement de la charge du véhicule.

La butée hydraulique selon l'invention peut de plus comporter une ou plusieurs des caractéristiques suivantes, qui peuvent être combinées entre elles.

Avantageusement, le corps de butée comporte un alésage cylindrique recevant le piston séparant la chambre de compression de la chambre de compensation de hauteur.

Dans ce cas, en particulier le piston peut comporter une entrée de fluide reliée à la chambre de compression, débouchant latéralement sur une lumière formée dans l'alésage du corps de butée, qui est reliée à la colonne à inertie.

De plus, avantageusement l'alésage peut recevoir une cloison transversale fixe séparant la chambre de compensation de hauteur du réservoir, contenant la restriction de passage.

Avantageusement, le réservoir est fermé vers l'avant par une membrane élastique avant.

De plus, la cloison fixe peut comporter un perçage comprenant une sortie de fluide donnant sur le réservoir, et débouchant latéralement sur la colonne à inertie.

Avantageusement, la face arrière de la chambre de compression comporte une membrane élastique arrière reliée au ressort d'avance. Avantageusement, le ressort d'avance est formé par un ressort métallique hélicoïdal ou par un élément en élastomère.

Avantageusement, la butée comporte un appui arrière disposé en parallèle du ressort d'avance, qui donne un appui direct de l'élément de suspension sur la chambre de compression après un niveau de compression de ce ressort d'avance.

L'invention a aussi pour objet un véhicule automobile comprenant des suspensions équipées de butées hydrauliques de fin de course, remarquable en ce que ces butées comportent l'une quelconque des caractéristiques précédentes.

L'invention sera mieux comprise et d'autres caractéristiques et avantages apparaîtront plus clairement à la lecture de la description ci-après donnée à titre d'exemple et de manière non limitative, en référence aux dessins annexés dans lesquels :
[Fig. 1] est un schéma en coupe axiale d'une butée hydraulique selon l'invention, avec un véhicule comportant une assiette haute ;
[Fig. 2] présente cette butée avec l'assiette du véhicule venant de descendre lors de son chargement ;
[Fig. 3] présente cette butée avec l'assiette du véhicule descendue après une temporisation ; et
[Fig. 4] présente cette butée avec l'assiette du véhicule venant de remonter lors de son déchargement.

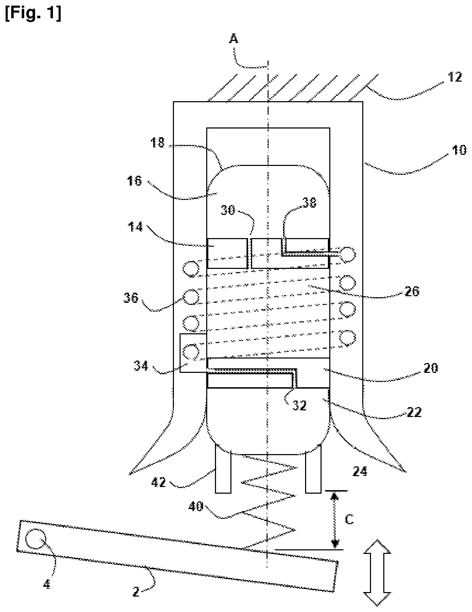

La figure 1 présente une butée de fin de course fixée à la caisse d'un véhicule 12, comprenant une symétrie axiale autour d'un axe A représenté verticalement dans cet exemple, qui peut être mis dans toute position dans le véhicule. Une direction axiale de la butée indiquée par la flèche AV, tournée vers le haut, est par convention appelée direction avant de la butée.

Un bras de suspension 2 fixé à la caisse du véhicule par un pivot 4, oscille en suivant le débattement d'une roue du véhicule, en venant en fin de course prendre appui dans la direction avant sous la butée de fin de course, pour freiner fortement la fin de cette course.

La butée comporte 10 un corps comprenant un alésage cylindrique axial, recevant dans cet alésage une cloison transversale fixe 14 formant la base d'un réservoir 16 fermé en haut par une membrane élastique supérieure avant 18 pouvant s'étendre vers l'avant dans ce corps, donnant une légère pression dans ce réservoir.

Un piston coulissant axialement 20 disposé sous la cloison fixe 14, sépare en dessous une chambre de compression 22 fermée vers le bas par une membrane élastique inférieure arrière 24, et au-dessus une chambre de compensation de hauteur 26 formée dans l'alésage entre ce piston et la cloison fixe.

Un passage de fluide avec restriction 30 traversant la cloison fixe 14, permet d'échanger avec une dynamique lente le fluide de la chambre de compensation 26 vers le réservoir 16 quand la pression dans cette chambre est supérieure à celle du réservoir, et à l'inverse vers la chambre de compensation sous l'effet d'une rétractation de la membrane supérieure 18 quand la pression dans ce réservoir est supérieure.

Un passage de fluide présente une entrée 32 formée dans la chambre de compensation 22 sous la face inférieure du piston 20, qui traverse latéralement ce piston pour arriver dans une lumière 34 formée dans l'alésage du corps 10.

Une colonne hélicoïdale à inertie 36 formée dans le corps 10 en entourant l'alésage, donnant une grande longueur avec une section réduite, débouche en partie inférieure dans la lumière 34 conduisant à l'entrée 32, et en partie supérieure sur une sortie 38 formée dans la cloison fixe 14, comprenant une partie transversale puis une partie axiale débouchant dans le réservoir 16. Le piston 20 coulissant axialement suivant une certaine course, la lumière 34 permet à la partie latérale de l'entrée 32 formée dans ce piston, de se trouver toujours en face de cette lumière quelle que soit sa position axiale, pour obtenir un passage constant du fluide allant de l'entrée 32 à la sortie 38 en passant par la colonne à inertie 36.

En variante l'extrémité inférieure de la colonne à inertie 36 peut déboucher directement sur une partie de l'alésage se trouvant dans la chambre de compression 22, restant toujours en dessous du piston 20 et au-dessus de la membrane inférieure 24, ce qui permet de ne pas utiliser de lumière dans cet alésage.

La base de la membrane inférieure 24 comporte un ressort axial d'avance 40, présentant une faible raideur, qui est en permanence en appui au-dessus du bras de suspension 2 pour communiquer au fluide contenu dans la chambre de compensation 22, une pression variable dépendant de la compression de ce ressort.

Après une certaine course C du bras de suspension 2, ayant comprimé suffisamment le ressort d'avance 40, ce bras arrive sous un appui arrière 42 fixé sous la membrane inférieure 24, pour commencer le freinage de la fin de course par la butée.

Le fonctionnement de la butée de fin de course est le suivant.

La figure 1 présente le véhicule peu chargé qui est au repos avec une assiette haute, le bras de suspension 2 est dans une position basse par rapport à la butée, le ressort d'avance 40 est peu comprimé.

La membrane supérieure 18 du réservoir 16 s'est détendue en refoulant avec une dynamique lente le fluide de ce réservoir vers la chambre de compensation de hauteur 26, en passant par la restriction 30. La chambre de compensation de hauteur 26 étant pleine, le piston 20 est dans sa position inférieure.

Des mouvements de la suspension autour de son assiette haute actionnent le ressort d'avance 40 dans les deux directions autour de sa position au repos, ce qui donne des faibles variations de pression autour d'une moyenne dans la chambre de compensation 26. Le fluide ne passe quasiment pas la restriction 30 donnant une dynamique lente de remplissage, le piston 20 reste à une hauteur constante.

Lors d'un effort occasionnel important sur la suspension après une course C, le bras de suspension 2 vient sur l'appui inférieur 42, la butée hydraulique de fin de course freine alors efficacement la fin de course avec le passage par la colonne à inertie 36 ajoutant une forte inertie grâce à la vitesse du fluide atteinte dans cette colonne.

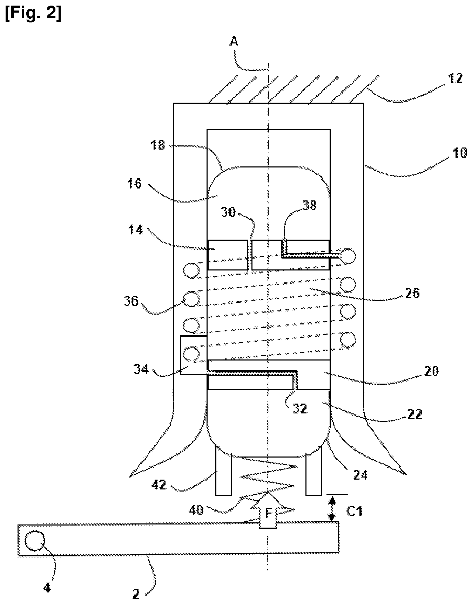

La figure 2 présente le véhicule au repos qui vient d'être chargé, son assiette s'abaisse et le bras de suspension 2 pivote en donnant la course réduite C1 entre ce bras de suspension 2 et l'appui inférieur 42.

Le ressort d'avance 40 est comprimé de manière permanente en ajoutant avec sa force F une pression dans la chambre de compression 22 transmise par l'intermédiaire du piston 20 à la chambre de compensation 26, qui finit avec une certaine temporisation par entraîner un passage du fluide au travers de la restriction 30, en vidant cette chambre de compensation pour remplir le réservoir 16.

On obtient une avance lente du piston 20, et une détente du ressort d'avance 40 jusqu'à ce que la diminution de la force F appliquée par ce ressort finisse par s'équilibrer avec la montée en pression dans le réservoir 16 qui tend sa membrane supérieure 18.

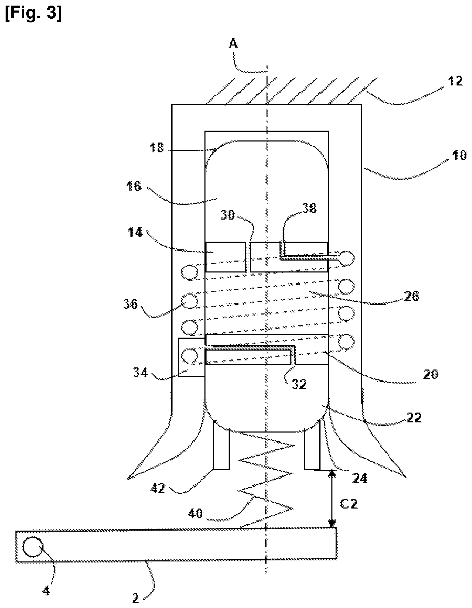

La figure 3 présente la fin de l'avance du piston 20 avec la nouvelle course C2 proche de la course d'origine C, qui est disponible pour un mouvement de la suspension avant d'arriver au freinage de la butée de fin de course.

On obtient quelle que soit la charge du véhicule et son assiette, un débattement sensiblement constant de la suspension avant d'arriver sur la butée de fin de course. De plus le fonctionnement de la butée de fin de course reste identique avec une force de freinage qui n'a pas changé, grâce à la colonne à inertie 36 donnant toujours la même qualité de freinage.

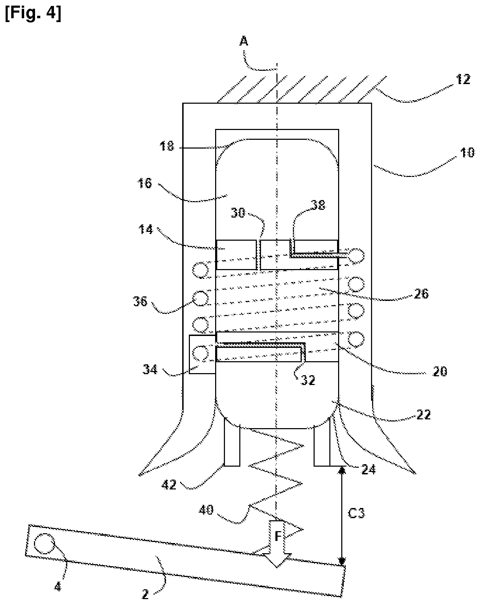

La figure 4 présente le véhicule au repos qui vient d'être déchargé avec une assiette qui remonte. Le bras de suspension 2 s'est abaissé en tirant sur le ressort d'avance 40 avec une force F', en donnant la course C3 supérieure à la course d'origine.

On a alors à l'inverse une chute de pression dans la chambre de compression 22 transmise par le piston 20 à la chambre de compensation 26, qui avec une dynamique lente finit par donner un transfert du fluide au travers de la restriction 30, du réservoir 16 vers cette chambre de compensation.

Le piston 20 descend, pour finir par revenir après une certaine temporisation à l'état initial présenté figure 1.

Le ressort inférieur d'avance 40 peut être réalisé de toute manière, en particulier avec un ressort métallique hélicoïdal, ou avec un élément en élastomère comprenant une faible raideur, formant un élément souple qui vient en appui sur le bras de suspension 2 sans générer de bruit.

## Revendications

1. Butée hydraulique de fin de course de suspension de véhicule automobile, freinant un mouvement axial dirigé vers une direction avant (AV), comportant une chambre de compression arrière (22) qui lors d'un freinage transmet son fluide en passant par une colonne de fluide à inertie (36), vers un réservoir (16) maintenant une pression dans le fluide, la chambre de compression (22) étant liée à un piston coulissant axialement (20), qui subit une force vers l'avant venant d'un ressort d'avance (40) relié à un élément de la suspension, (2) lors d'une compression de cette suspension, **caractérisée en ce que** ledit piston coulissant (20) subit une force vers l'arrière venant d'une chambre de compensation de hauteur (26) prenant appui sur un corps de la butée (10), alimentée en fluide sous pression par le réservoir (16) en passant par une restriction de passage de fluide (30).

2. Butée hydraulique selon la revendication 1, le corps de butée (10) comportant un alésage cylindrique recevant le piston (20) séparant la chambre de compression (22) de la chambre de compensation de hauteur (26).

3. Butée hydraulique selon la revendication 2, le piston (20) comportant une entrée de fluide (32) reliée à la chambre de compression (22), débouchant latéralement sur une lumière (32) formée dans l'alésage du corps de butée (10), qui est reliée à la colonne à inertie (36).

4. Butée hydraulique selon la revendication 2 ou 3, l'alésage recevant une cloison transversale fixe (14) séparant la chambre de compensation de hauteur (26) du réservoir (16), contenant la restriction de passage (30).

5. Butée hydraulique selon la revendication 4, le réservoir (16) étant fermé vers l'avant par une membrane élastique avant (18).

6. Butée hydraulique selon la revendication 4 ou 5, la cloison fixe (14) comportant un perçage comprenant une sortie (38) donnant sur le réservoir (16), et débouchant latéralement sur la colonne à inertie (36).

7. Butée hydraulique selon l'une quelconque des revendications précédentes, la face arrière de la chambre de compression (22) comportant une membrane élastique arrière (24) reliée au ressort d'avance (40).

8. Butée hydraulique selon l'une quelconque des revendications précédentes, le ressort d'avance (40) étant formé par un ressort métallique hélicoïdal ou par un élément en élastomère.

9. Butée hydraulique selon l'une quelconque des revendications précédentes, comportant un appui arrière (42) disposé en parallèle du ressort d'avance (40), qui donne un appui direct de l'élément de suspension (2) sur la chambre de compression (22) après un niveau de compression de ce ressort d'avance (40).

10. Véhicule automobile comprenant des suspensions équipées de butées hydrauliques de fin de course, ces butées étant selon l'une quelconque des revendications précédentes.

## Patentansprüche

1. Hydraulischer Endlageranschlag für eine Kraftfahrzeugaufhängung, der eine in eine Vorwärtsrichtung (AV) gerichtete Axialbewegung bremst, mit einer hinteren Druckkammer (22), die bei einer Bremsung ihr Fluid über eine Trägheitsfluidsäule (36) zu einem Behälter (16) überträgt, der einen Druck in dem Fluid aufrechterhält, wobei die Druckkammer (22) mit einem axial verschiebbaren Kolben (20) verbunden ist, der eine nach vorne gerichtete Kraft von einer mit einem Element der Aufhängung verbundenen Vorschubfeder (40) erfährt, **dadurch gekennzeichnet, dass** der verschiebbare Kolben (20) eine Kraft erfährt nach hinten aus einer Höhenausgleichskammer (26), die sich an einem Körper des Anschlags (10) abstützt und über eine Fluiddurchflussbeschränkung (30) mit Druckfluid aus dem Vorratsbehälter (18) gespeist wird.

2. Hydraulischer Anschlag nach Anspruch 1, mit einer zylindrischen Bohrung, die den Kolben (20) aufnimmt, der die Druckkammer (22) von der Höhenausgleichskammer (26) trennt.

3. Hydraulischer Anschlag nach Anspruch 2, mit einem mit der Druckkammer (22) verbundenen Fluideinlass (32), der seitlich in eine in der Bohrung des Anschlagkörpers (10) ausgebildete Öffnung (32) mündet, die mit der Trägheitssäule (36) verbunden ist.

4. Hydraulischer Anschlag nach Anspruch 2 oder 3, aufnehmend eine die Durchgangsbeschränkung (30) aufnehmende, die Höhenausgleichskammer (26) vom Behälter (16) trennende, ortsfeste Querwand (14).

5. Hydraulischer Anschlag nach Anspruch 4, der nach vorne durch eine vordere elastische Membran (18) verschlossen ist.

6. Hydraulischer Anschlag nach Anspruch 4 oder 5, mit einer Bohrung, die einen Auslass (38) aufweist, der zu dem Behälter (16) führt und seitlich an der Trägheitssäule (36) mündet.

7. Hydraulischer Anschlag nach einem der vorhergehenden Ansprüche, mit einer rückwärtigen elastischen Membran (24), die mit der Vorschubfeder (40) verbunden ist.

8. Hydraulischer Anschlag nach einem der vorhergehenden Ansprüche, wobei die Vorschubfeder (40) durch eine Metallschraubenfeder oder ein Elastomerelement gebildet ist.

9. Hydraulischer Anschlag nach einem der vorhergehenden Ansprüche mit einer parallel zur Vorschubfeder (40) angeordneten hinteren Abstützung (42), die nach einem Druckniveau dieser Vorschubfeder (40) eine direkte Abstützung des Aufhängeelements (2) auf der Druckkammer (22) bewirkt.

10. Kraftfahrzeug mit Aufhängungen, die mit hydraulischen Endanschlägen ausgerüstet sind, wobei diese Anschläge nach einem der vorhergehenden Ansprüche ausgebildet sind.

## Claims

1. Hydraulic end-of-travel stop for a motor vehicle suspension, braking an axial movement directed towards a front direction (AV), comprising a rear compression chamber (22) which, during braking, transmits its fluid passing through a column of inertial fluid (36), to a reservoir (16) maintaining a pressure in the fluid, the compression chamber (22) being connected to an axially sliding piston (20), which undergoes a force towards the front coming from a forward spring (40) connected to an element of the suspension, **characterized in that** said sliding piston (20) undergoes a force towards the rear coming from a height compensation chamber (26) bearing on a body of the stop (10), supplied with pressurized fluid by the reservoir (18) passing through a fluid passage restriction (30).

2. Hydraulic stop according to claim 1, comprising a cylindrical bore receiving the piston (20) separating the compression chamber (22) from the height compensation chamber (26).

3. Hydraulic abutment according to claim 2, comprising a fluid inlet (32) connected to the compression chamber (22), opening laterally into an opening (32) formed in the bore of the abutment body (10), which is connected to the inertia column (36).

4. Hydraulic stop according to claim 2 or 3, receiving a fixed transverse partition (14) separating the height compensation chamber (26) from the reservoir (16), containing the passage restriction (30).

5. Hydraulic stop according to claim 4, being closed towards the front by a front elastic membrane (18).

6. Hydraulic stop according to claim 4 or 5, comprising a bore comprising an outlet (38) opening onto the reservoir (16) and opening laterally onto the inertia column (36).

7. Hydraulic stop according to any one of the preceding claims, comprising a rear elastic membrane (24) connected to the feed spring (40).

8. Hydraulic stop according to any one of the preceding claims, the feed spring (40) being formed by a helical metal spring or by an elastomer element.

9. Hydraulic stop according to any one of the preceding claims, comprising a rear support (42) arranged in parallel with the advance spring (40), which gives a direct support of the suspension element (2) on the compression chamber (22) after a level of compression of this advance spring (40).

10. Motor vehicle comprising suspensions equipped with end-of-travel hydraulic stops, these stops being according to any one of the preceding claims.
